# EUROPEAN PATENT SPECIFICATION

(11) **EP 4 404 342 B1**
(45) Date of publication and mention of the grant of the patent: **18.03.2026**
(21) Application number: 21969379.3
(22) Date of filing: 28.12.2021
(51) Int. Cl.: H01M 50/20

(54) **BATTERY, ELECTRIC DEVICE, AND BATTERY ASSEMBLING METHOD**
BATTERIE, ELEKTRISCHE VORRICHTUNG UND BATTERIEMONTAGEVERFAHREN
BATTERIE, DISPOSITIF ÉLECTRIQUE ET PROCÉDÉ D'ASSEMBLAGE DE BATTERIE

(43) Date of publication of application: 24.07.2024
(73) Proprietor: Contemporary Amperex Technology (Hong Kong) Limited, Central, Central And Western District (HK)
(72) Inventor: WANG, Liangyi, Ningde, Fujian 352100 (CN)
(74) Representative: Gong, Jinping
(86) International application number: PCT/CN2021/142226
(87) International publication number: WO 2023/123001

(56) References cited:
- CN-A- 106 450 090
- CN-A- 106 450 090
- CN-A- 108 604 655
- CN-A- 108 649 149
- CN-A- 109 546 023
- CN-A- 109 546 023
- CN-A- 112 534 632
- US-A1- 2011 206 948

## Description

### TECHNICAL FIELD

This application relates to the field of battery technologies, and in particular, to a battery, an electric apparatus including the battery, and a battery assembling method.

### BACKGROUND

Energy conservation and emission reduction are crucial to sustainable development of the automobile industry. In this context, electric vehicles, with their advantages in energy conservation and environmental protection, have become an important part of sustainable development of the automobile industry. For the electric vehicles, battery technology is an important factor in connection with their development.

In development of the battery technology, in addition to improvement of battery performance, layout and setting of electrical connection members, wire harnesses, and the like in the battery also have major impact on improvement of energy density of the battery, reliability of the battery in use, and the like, and therefore, have always been an important research and development issue in the field of batteries. A battery with straps and electrode connectors is disclosed in US 2011/206948 A1.

### SUMMARY

In view of the foregoing technical problems, this application is completed, and one of objectives of this application is to provide a battery in which an electrical connection member can be reliably fastened to prevent fracture of the electrical connection member in the battery due to fatigue and in turn improve reliability during use, and to provide an electric apparatus including the battery according to claim 1 and a battery assembling method according to claim 14.

Another objective of this application is to provide a battery in which space occupied by the battery box and the like can be reduced to further improve energy density of the battery, and to provide an electric apparatus including the battery and a battery assembling method.

To achieve at least one of the foregoing objectives, a first aspect of this application provides a battery, including: a plurality of battery cells, a strap-shaped member disposed fixedly relative to the plurality of battery cells, an electrical connection member located adjacent to the strap-shaped member, and a trough-shaped member, where the trough-shaped member integrally has at least a first accommodation trough and a second accommodation trough, where the strap-shaped member is accommodated in the first accommodation trough, the electrical connection member is accommodated in the second accommodation trough, and a portion of the trough-shaped member is located between the strap-shaped member and the battery cells.

Because the strap-shaped member is disposed fixedly relative to the plurality of battery cells, a portion of the trough-shaped member is located between the strap-shaped member and the battery cells, and the strap-shaped member is accommodated in the first accommodation trough of the trough-shaped member, the trough-shaped member is fixedly installed on the strap-shaped member. Because the electrical connection member is accommodated in the second accommodation trough of the trough-shaped member, the electrical connection member also has relatively fixed position, reliably fastening the electrical connection member. Because the electrical connection member is reliably fastened, adverse effects such as fracture of the electrical connection member in the battery due to fatigue are avoided, thereby improving reliability of the battery during use.

In addition, as mentioned above, in this application, the electrical connection member is reliably fastened through the trough-shaped member fastened to the strap-shaped member, and therefore, a short electric box with a shorter side wall can be used for the battery, which can reduce space occupied by the battery box and the like, so that as many battery cells as possible can be arranged in limited battery installation space, thereby improving energy density of the battery.

In some embodiments of this application, a trough bottom plate of the first accommodation trough is integrally connected with a trough bottom plate of the second accommodation trough; the trough bottom plate of the first accommodation trough is located between the strap-shaped member and the battery cells; and the trough bottom plate of the second accommodation trough is located between the electrical connection member and the battery cells.

Because the trough bottom plates of the two accommodation troughs are integrally connected, the trough-shaped member can be easily constructed into an integrally formed structure. Because the trough bottom plate of the first accommodation trough for accommodating the strap-shaped member is located between the strap-shaped member and the battery cells, the trough-shaped member is firmly fastened to the strap-shaped member through a simple structure. Because the trough bottom plate of the second accommodation trough for accommodating the electrical connection member is located between the electrical connection member and the battery cells, the electrical connection member can be reliably isolated from the battery cell, thereby reliably protecting the electrical connection member.

In some embodiments of this application, the battery further includes a wire harness; the trough-shaped member further integrally has a third accommodation trough, and the wire harness is accommodated in the third accommodation trough; and the trough bottom plate of the first accommodation trough, the trough bottom plate of the second accommodation trough, and a trough bottom plate of the third accommodation trough are integrally connected in a coplanar manner.

Because the trough-shaped member further integrally has the third accommodation trough for accommodating the wire harness, the wire harness can also be fastened without increasing the number of parts, which can ensure that the electrical connection member around the battery, the wire harness, and the like are trimly arranged at designated positions. Because the trough bottom plates of the first, second, and third accommodation troughs are integrally connected in the coplanar manner, the integrally formed trough-shaped member has a simple structure and can be attached to the battery cell during installation, which improves installation stability.

In some embodiments of this application, the first accommodation trough, the second accommodation trough, and the third accommodation trough each are strip-shaped, and the first accommodation trough is disposed parallel to at least one of the second accommodation trough and the third accommodation trough; and the first accommodation trough is disposed abutting on the second accommodation trough, or the first accommodation trough is disposed abutting on the third accommodation trough.

The first, second, and third accommodation troughs each are strip-shaped, and therefore are particularly suitable for accommodating the strap-shaped member, the electrical connection member, and the wire harness in a strip shape. In addition, relative positions of the trough-shaped member, the strap-shaped member, the electrical connection member, and the wire harness are fixed in a long range via the strip-shaped trough structures, and therefore, fastening force can be ensured in the long range, which can reliably avoid swinging or shaking of the electrical connection member, the wire harness, and the like. In addition, the foregoing designed trough-shaped member is particularly suitable for a case in which extension directions of the strap-shaped member, the electrical connection member, and the wire harness in the battery are substantially parallel. In addition, the first accommodation trough may be disposed abutting on the second accommodation trough, or may be disposed abutting on the third accommodation trough. Therefore, even if layout of the electrical connection member and the wire harness around the battery cells changes, the electrical connection member and the wire harness can be fastened via the trough-shaped members with different structures.

In some embodiments of this application, the first accommodation trough is disposed on an edge side of the trough-shaped member at one end.

Because the first accommodation trough for accommodating the strap-shaped member is located on the edge side of the trough-shaped member at one end, to install the trough-shaped member relative to the strap-shaped member, it is only necessary to let one end of the trough-shaped member exceed the strap-shaped member through the gap between the strap-shaped member and the battery cell, to clamp the trough-shaped member (the first accommodation trough of the trough-shaped member) into the strap-shaped member, thereby facilitating installation.

In some embodiments of this application, one or both end portions of the trough-shaped member in an extension direction have an escape portion, and the escape portion is formed by recessing the first accommodation trough relative to the second accommodation trough in the extension direction.

Because the end portion of the trough-shaped member in the extension direction of the first accommodation trough has an escape portion, meaning the first accommodation trough is shorter than the second accommodation trough in the extension direction, when the trough-shaped member is being installed relative to the strap-shaped member, one end edge of the trough-shaped member can easily exceed the strap-shaped member through the gap between the strap-shaped member and the battery cell, and interference between the end portion in the extension direction of the first accommodation trough and the strap-shaped member is less likely to occur.

In addition, because the escape portion is formed only at the end portion of the first accommodation trough, fastening and maintaining effects of the trough-shaped member on the electrical connection member can be ensured to the maximum extent.

In some embodiments of this application, the battery further includes a cover plate covering the trough-shaped member.

The cover plate covers the trough-shaped member, so that the strap-shaped member, the electrical connection member, the wire harness, and the like can be reliably held in their respective accommodation troughs, thereby preventing the trough-shaped member from falling off the strap-shaped member and preventing the electrical connection member, the wire harness, or the like from falling off the trough-shaped member.

In some embodiments of this application, the trough-shaped member has L-shaped trough side walls with an L-shaped cross section and T-shaped trough side walls with a T-shaped cross section; and the cover plate has engaging portions engaged with the L-shaped trough side walls of the trough-shaped member, and fitting troughs fitted with the T-shaped trough side walls.

The L-shaped trough side walls and the T-shaped trough side walls of the trough-shaped member are fitted with the corresponding engaging portions and fitting troughs on the cover plate, so that the cover plate can be installed on the trough-shaped member and the cover plate is uneasy to fall off the trough-shaped member.

In some embodiments of this application, the L-shaped trough side wall and the T-shaped trough side wall extend along an extension direction of the trough-shaped member, and the L-shaped trough side wall is disposed on an end edge of the trough-shaped member.

Because the L-shaped trough side wall and the T-shaped trough side wall extend along the extension direction of the trough-shaped member, the cover plate can slide relative to the trough-shaped member in its extension direction when the fitting troughs of the cover plate are fitted with these side walls, so that the cover plate can be easily installed at a designated position from an end of the trough-shaped member in the extension direction.

In some embodiments of this application, the cover plate has rivet holes and is fastened to a bracket on a side with the trough-shaped member via rivets.

Because the cover plate can also be fastened to the bracket on the side with the trough-shaped member via the rivets, the cover plate can be reliably positioned relative to the trough-shaped member, thereby avoiding an undesirable case in which the cover plate freely slides on the trough-shaped member due to vibration or the like.

In some embodiments of this application, a material of at least one of the trough-shaped member and the cover plate is an insulating material.

Because the material of the trough-shaped member and/or the cover plate is an insulating material, the electrical connection member, the wire harnesses, and the like can be insulated from a surrounding metal member and the like, so that the electrical connection member, the wire harnesses, and the like can be reliably isolated and protected.

In some embodiments of this application, the electrical connection member is a high-voltage connection member.

Therefore, the high-voltage connection member mainly used to transmit electric energy of the battery can be reliably fastened and protected, which improves reliability of the key components of the battery during use and even the entire battery.

In some embodiments of this application, the plurality of battery cells are an odd number of battery cells, and the high-voltage connection member electrically connects the battery cells with an electric box; or the plurality of battery cells form an odd number of battery modules, and the high-voltage connection member electrically connects the battery modules with the electric box.

Because there is usually a high-voltage connection member with large extension length in a case that an odd number of battery cells are connected, the trough-shaped member in this application is particularly suitable for maintaining and fastening such high-voltage connection member, which can avoid fracture of the high-voltage connection member due to fatigue caused when the high-voltage connection member is more prone to great vibration if the high-voltage connection member is long.

A second aspect of this application provides an electric apparatus, including the battery in any one of implementations of the first aspect.

Therefore, it is possible to provide an electric apparatus with high energy density in which the electrical connection member in the battery is reliably fastened to be less likely to undergo fracture due to fatigue, so that the battery has high reliability during use and occupies less space.

A third aspect of this application provides a battery assembling method, where the assembling method includes the following steps: providing a plurality of battery cells, where a strap-shaped member is disposed fixedly relative to the plurality of battery cells; disposing a trough-shaped member relative to the strap-shaped member and arranging a portion of the trough-shaped member between the strap-shaped member and the battery cells, where the trough-shaped member integrally has at least a first accommodation trough and a second accommodation trough, and the strap-shaped member is accommodated in the first accommodation trough; and installing an electrical connection member by accommodating the electrical connection member in the second accommodation trough.

Because the strap-shaped member is disposed fixedly relative to the plurality of battery cells, a portion of the trough-shaped member is located between the strap-shaped member and the battery cells, and the strap-shaped member is accommodated in the first accommodation trough of the trough-shaped member, the trough-shaped member is fixedly installed on the strap-shaped member. Because the electrical connection member is accommodated in the second accommodation trough of the trough-shaped member, the electrical connection member also has relatively fixed position, reliably fastening the electrical connection member. Because the electrical connection member is reliably fastened, adverse effects such as fracture of the electrical connection member in the battery due to fatigue are avoided, thereby improving reliability of the battery during use.

In addition, as mentioned above, in this application, the electrical connection member is reliably fastened through the trough-shaped member fastened to the strap-shaped member, and therefore, a short electric box with a shorter side wall can be used for the battery, which can reduce space occupied by the battery box and the like, so that as many battery cells as possible can be arranged in limited battery installation space, thereby improving energy density of the battery.

In some embodiments of this application, the trough-shaped member further includes a third accommodation trough, and the assembling method further includes a step of installing a wire harness by accommodating the wire harness in the third accommodation trough.

Because the wire harness is accommodated in the third accommodation trough of the trough-shaped member, the wire harness can also be fastened and maintained without increasing the number of parts. Therefore, it can be ensured that the electrical connection member around the battery, the wire harness, and the like are trimly arranged at designated positions.

In some embodiments of this application, the assembling method further includes the following step: installing a cover plate relative to the trough-shaped member and fastening the cover plate relative to the trough-shaped member.

The cover plate covers the trough-shaped member, so that the strap-shaped member, the electrical connection member, the wire harness, and the like can be reliably held in their respective accommodation troughs, thereby preventing the trough-shaped member from falling off the strap-shaped member and preventing the electrical connection member, the wire harness, or the like from falling off the trough-shaped member. In addition, because the cover plate is fastened relative to the trough-shaped member, an undesirable case in which the cover plate freely slides on the trough-shaped member due to vibration or the like can be avoided.

In some embodiments of this application, the installing a cover plate relative to the trough-shaped member and fastening the cover plate relative to the trough-shaped member includes: engaging fitting troughs of the cover plate with L-shaped trough side walls and T-shaped trough side walls of the trough-shaped member; sliding the cover plate to a designated position relative to the trough-shaped member under guidance of the L-shaped trough side walls and the T-shaped trough side walls; and fastening the cover plate to the bracket on the side with the trough-shaped member via rivets.

Therefore, the L-shaped trough side walls and the T-shaped trough side walls of the trough-shaped member are fitted with the corresponding fitting troughs on the cover plate, so that the cover plate can be installed on the trough-shaped member and the cover plate is uneasy to fall off the trough-shaped member. Because the cover plate can slide relatively on the trough-shaped member under guidance of the L-shaped trough side walls and the T-shaped trough side walls, the cover plate can be easily installed at a designated position from an end of the trough-shaped member in the extension direction. In addition, the cover plate can be reliably fastened to the bracket on the side with the trough-shaped member via rivets.

Through the foregoing solutions, in this application, a battery, an electric apparatus including the battery, and a battery assembling method having at least one of the following effects can be implemented.

The electrical connection member in the battery can be reliably fastened and maintained, so that fracture of the electrical connection member in the battery due to fatigue can be avoided, and reliability of the battery during use can be further improved. Certainly, reliability of the electric apparatus including the battery during use is correspondingly improved, and maintenance costs are reduced.

In addition, space occupied by the battery box and the like can be reduced, thereby improving energy density of the battery. Correspondingly, use efficiency, design freedom and the like of space around the battery in the electric apparatus including the battery are improved, and the number of times of replacing or charging the battery in the electric apparatus is reduced, and use costs are reduced.

### BRIEF DESCRIPTION OF DRAWINGS

FIG. 1 is a schematic structural diagram of a vehicle according to an embodiment of this application.
FIG. 2 is a schematic diagram of a connection structure of a battery cell according to an embodiment of this application.
FIG. 3 is a schematic diagram of a concise structure of a battery according to an embodiment of this application.
FIG. 4 is a three-dimensional schematic exploded view of a trough-shaped member and a cover plate in a battery according to an embodiment of this application.
FIG. 5 is a schematic cross-sectional diagram of a structure of a trough-shaped member and a cover plate in a battery in an assembled state according to an embodiment of this application.
FIG. 6 is a schematic exploded view of the trough-shaped member and the cover plate shown in FIG. 5.
FIG. 7 is a schematic cross-sectional diagram of a structure of a trough-shaped member and a cover plate in a battery in an assembled state according to another embodiment of this application.
FIG. 8 is a schematic cross-sectional diagram of a structure of a trough-shaped member and a cover plate in a battery in an assembled state according to still another embodiment of this application.
FIG. 9 is a flowchart of a battery assembling method according to an embodiment of this application.
FIG. 10 is a flowchart of a battery assembling method according to another embodiment of this application.
FIG. 11 is a flowchart of a battery assembling method according to still another embodiment of this application.
FIG. 12 is a flowchart of installing and fastening a cover plate in a battery assembling method according to an embodiment of this application.

### Reference signs:

1 - vehicle; 10 - battery; 11 - controller; 12 - motor; 100, 100a, 100b, 100c - battery cell; 101 - strap-shaped member; 102 - electrical connection member; 103 - wire harness; 104 - trough-shaped member; 105, 205, 305 - cover plate; 106 - fastener; 107 - box; 108 - bracket; 110 - electric box connector; 111, 311 - first accommodation trough; 112 - trough bottom plate of the first accommodation trough; 113, 313 - second accommodation trough; 114 - trough bottom plate of the second accommodation trough; 115, 315 - third accommodation trough; 116, 316 - trough bottom plate of the third accommodation trough; 117a, 117b, 217a, 217b - L-shaped trough side wall; 118a, 118b - T-shaped trough side wall; 119 - escape portion; 120 - rivet hole; 121a, 221a - first engaging portion; 121b, 221b - second engaging portion; 123a - first fitting trough; and 123b - second fitting trough.

### DESCRIPTION OF EMBODIMENTS

Specific implementations of this application are described in detail below with reference to the accompanying drawings. The accompanying drawings are merely intended to illustrate preferred embodiments of this application, and should not be construed as a limitation on this application. Throughout the accompanying drawings, the same reference signs represent the same parts or elements.

Advantages and benefits of this application shall become apparent to persons of ordinary skill in the art by reading detailed descriptions of the following embodiments. The following embodiments are merely intended for a clearer description of the technical solutions of this application, and therefore are exemplary, which does not limit the claimed protection scope of this application.

It should be noted that, unless otherwise stated, the technical terms or scientific terms used in this specification should be the usual meanings understood by persons of ordinary skill in the art to which the embodiments of this application belong.

In the description of the embodiments of this application, the orientations or positional relationships indicated by the technical terms "center", "longitudinal" "transverse", "length", "width", "thickness", "upper", "lower", "front", "rear", "left", "right", "top", "bottom", "inside", "outside", and the like are based on the orientations or positional relationships shown in the accompanying drawings. These terms are merely for ease and brevity of the description of the embodiments of this application rather than indicating or implying that the apparatuses or components mentioned must have specific orientations, or must be constructed or manipulated according to specific orientations, and therefore shall not be construed as any limitations on embodiments of this application.

In addition, in the description of this application, "a plurality of" means at least two unless otherwise specifically stated.

In the description of the embodiments of this application, unless otherwise specified and defined explicitly, the terms "mount", "connect", "join", and "fasten" should be understood in their general senses. For example, they may refer to a fixed connection, a detachable connection, or an integral connection, may refer to a mechanical connection or an electrical connection, and may refer to a direct connection, an indirect connection via an intermediate medium, an internal communication between two elements, or an interaction between two elements. Persons of ordinary skill in the art can understand specific meanings of these terms in this application as appropriate to specific situations.

In the description of the embodiments of this application, unless otherwise clearly specified and defined, a first feature being "on" or "under" a second feature may mean that the first and second features are in direct contact, or the first and second features are in indirect contact via an intermediate medium. Moreover, that the first feature is "above", "over", or "on" the second feature may mean that the first feature is directly above or obliquely above the second feature or simply mean that the first feature has a higher level than the second feature. The first feature being "under", "below", or "beneath" the second feature may mean that the first feature is directly beneath or obliquely beneath the second feature, or simply mean that the first feature is horizontally lower than the second feature.

In a battery such as a traction battery, a high-voltage connection member is an important component in a traction battery system, and has a function of transmitting battery energy. Based on grouping of the battery cells, there may also be a high-voltage connection member with greater length.

Currently, when the battery uses a tall electric box (for example, the box is 1/3 taller than the battery cell), the high-voltage connection member is typically fastened by additionally disposing a fastening bracket in the box, but the fastening bracket occupies much space in the electric box, which causes a problem of low grouping efficiency of the battery cells in the case of a constant overall volume of the battery. In addition, the tall electric box itself also occupies much space, which hinders improvement of overall energy density of the battery.

To improve the foregoing grouping efficiency and energy density of the battery, the battery can use a short electric box (for example, the box does not exceed 1/3 height of the battery cell). Because the short electric box occupies less area, the grouping efficiency of the battery cells is improved, and the overall energy density of the battery is improved. However, in the short electric box, as the electric box becomes shorter, it is impossible to dispose a fastening bracket to fasten the high-voltage connection member like the tall electric box. If the high-voltage connection member and the like are not fastened, there is a problem of fracture due to fatigue caused when the high-pressure connection member is subjected to high-strength loads such as vibration. Therefore, how to fasten and maintain the electrical connection members including the high-voltage connection member without reducing the grouping efficiency of the battery cells and the overall energy density of the battery has become an urgent technical problem to be resolved.

For the foregoing technical problem, the inventors of this application have skillfully designed a structure for reliably fastening and maintaining the electrical connection members including the high-voltage connection member by using a strap-shaped member (for example, a steel strap) in the battery instead of using an electric box of the battery, thereby resolving, via a simple structure, the problem of fracture of the high-pressure connection member and the like due to fatigue without reducing the grouping efficiency of the battery cells and the overall energy density of the battery.

The batteries involved in this application can be any batteries such as battery modules and battery packs, or primary batteries and secondary batteries. For example, the secondary batteries include nickel-hydride batteries, nickel-cadmium batteries, lead-acid (or lead storage) batteries, lithium-ion batteries, sodium-ion batteries, polymer batteries, and the like. The batteries are applicable to various electric devices using batteries, for example, mobile phones, portable devices, notebook computers, electric bicycles, electric toys, electric tools, electric vehicles, ships, and spacecraft. For example, the spacecraft includes planes, rockets, space shuttles, spaceships, and the like. The batteries are configured to provide electric energy for the foregoing electric devices.

It should be understood that the technical solutions described in the embodiments of this application are not only applicable to the batteries and electric devices described above, but also applicable to all batteries and electric devices using batteries. However, for the brevity of description, in the following embodiments, an electric vehicle is used as an example for description. However, apparently, applicable scenarios of the battery involved in the embodiments of this application and the electric device involved in the embodiments of this application are not limited to the electric vehicle.

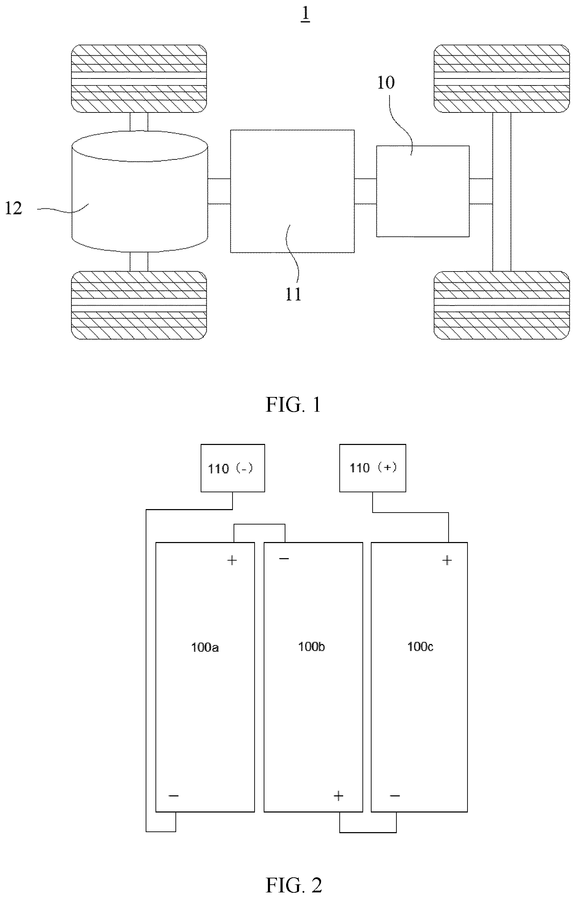

FIG. 1 is a schematic structural diagram of a vehicle 1 involved in an embodiment of this application. As shown in FIG. 1, the vehicle 1 may be an oil-fueled vehicle, a gas-powered vehicle, or a new energy vehicle. The new energy vehicle may be a battery electric vehicle, a hybrid electric vehicle, an extended-range electric vehicle, or the like. The vehicle 1 is mounted with a battery 10, where the battery 10 may be disposed at the bottom, front, or rear of the vehicle 1. The battery 10 may be configured to supply power to the vehicle 1. For example, the battery 10 may be used as an operational power supply for the vehicle 1. The vehicle 1 may further include a controller 11 and a motor 12, where the controller 11 is configured to control the battery 10 to supply power to the motor 12, for example, to satisfy power needs of start, navigation, and driving of the vehicle 1.

In some embodiments of this application, the battery 10 can be used as not only the operational power supply for the vehicle 1 but also a driving power supply for the vehicle 1, replacing or partially replacing fossil fuel or natural gas to provide driving traction for the vehicle 1.

To meet different requirements for power use, the battery 10 may include a plurality of battery cells 100. A battery cell 100 is a smallest element constituting a battery module or a battery pack. The plurality of battery cells 100 can be connected in series and/or in parallel through an electrode terminal for various application scenarios. The battery involved in this application may include a battery module or a battery pack. The plurality of battery cells 100 may be connected in series, parallel, or series-parallel, and being connected in series-parallel means a combination of series and parallel connections. The plurality of battery cells 100 may directly form a battery 10 in the embodiments of this application, or may first form battery modules, and then the battery modules form the battery.

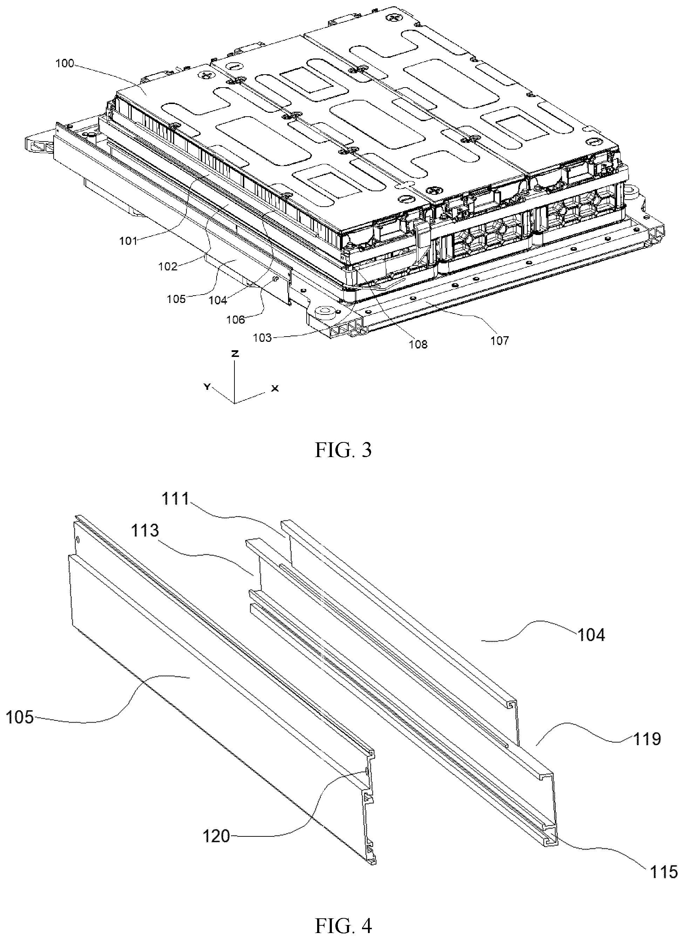

FIG. 2 schematically shows a connection structure of a battery cell according to an embodiment of this application. In the example shown in FIG. 2, a plurality of battery cells 100a, 100b, and 100c are connected in series by connecting positive electrodes to negative electrodes, and the positive electrodes and the negative electrodes of the battery group connected in series are respectively connected to a positive electrode terminal and a negative electrode terminal of an electric box connector 110. The number of battery cells 100 connected in series is not particularly limited, and FIG. 2 and FIG. 3 show an example in which an odd number (for example, 3) of battery cells 100 are connected.

FIG. 3 schematically shows a structure of a battery according to an embodiment of this application. As shown in FIG. 3, the battery 10 may include a box 107 and at least one battery cell 100 accommodated in the box 107. The box 107 primarily serves the purpose of accommodating and holding the battery cell 100. The box 107 may be of a simple three-dimensional structure such as a rectangular structure or a cylindrical structure or a spherical structure, or may be of a complex three-dimensional structure formed by combining simple three-dimensional structures such as a rectangular structure or a cylindrical structure or a spherical structure. This is not limited in the embodiments of this application. FIG. 3 exemplarily shows a rectangular short box 107. The box 107 may be made of an alloy material such as an aluminum alloy or an iron alloy, a polymer material such as polycarbonate or polyisocyanurate foam, or a composite material produced from materials such as glass fiber and epoxy resin. This is not limited in the embodiments of this application either.

In some embodiments, the battery cell 100 may be a lithium-ion battery, a sodium-ion battery, a magnesium-ion battery, or the like. This is not limited in the embodiments of this application. The battery cell 100 may be cylindrical, flat, rectangular, or of other shapes, and this is not limited in the embodiments of this application either. The battery cells 100 are typically categorized into three types by packaging method: columnar battery cell, prismatic battery cell, and pouch battery cell, and this is not limited in the embodiments of this application either. Columnar battery cells can also be divided into cylindrical battery cells, polygonal prismatic battery cells, and the like based on a cross-sectional shape of a columnar surface.

In addition, although not specifically illustrated, the battery cell 100 in this embodiment of this application typically includes an end cover, a housing, and a cell assembly.

The end cover refers to a component that covers an opening of the housing to isolate an internal environment of the battery cell 100 from an external environment. Without limitation, a shape of the end cover may fit with that of the housing, so that the end cover can match the housing. Optionally, the end cover may be made of a material with specified hardness and strength (for example, aluminum alloy), so that the end cover is less likely to deform when subjected to extrusion and collision, allowing the battery cell 100 to have higher structural strength and enhanced safety performance. The end cover may be provided with functional components such as an electrode terminal. The electrode terminal may be configured to be electrically connected to the cell assembly for outputting or inputting electric energy of the battery cell 100. The end cover may also be made of various materials, such as copper, iron, aluminum, stainless steel, aluminum alloy, or plastic, which are not particularly limited in the embodiments of this application. In some embodiments, an insulator may also be disposed at an inner side of the end cover. The insulator can be configured to isolate electrical connection components in the housing from the end cover, reducing a risk of short circuit. For example, the insulator may be made of plastic, rubber, or the like.

The housing is an assembly configured to cooperate with the end cover to form an internal environment of the battery cell 100, where the formed internal environment can be used to accommodate the cell assembly, an electrolyte (not shown in the figure), and other components. The housing and the end cover may be independent components, an opening may be provided in the housing, and the end cover covers the opening to form the internal environment of the battery cell. Without limitation, the end cover and the housing may also be integrated. Specifically, the end cover and the housing may form a shared connection surface before other components are disposed inside the housing, and then the end cover covers the housing when inside of the housing needs to be enclosed. The housing may be of various shapes and sizes, such as a rectangular shape, a cylindrical shape, and a hexagonal prism shape. Specifically, the shape of the housing may be determined based on a specific shape and size of a cell assembly. The housing may be made of various materials, such as copper, iron, aluminum, stainless steel, aluminum alloy, and plastic, which are not particularly limited in the embodiments of this application.

The cell assembly is a component in which electrochemical reactions take place in the battery cell 100. There may be one or more battery assemblies in the housing. The cell assembly is mainly formed by winding or stacking a positive electrode plate and a negative electrode plate, and a separator is generally disposed between the positive electrode plate and the negative electrode plate. The parts with an active material on the positive electrode plate and the negative electrode plate constitute a body portion of the cell assembly, and the parts without active material on the positive electrode plate and the negative electrode plate respectively constitute tabs (not shown in the figure). A positive tab and a negative tab may both be located at one end of the body portion or be located at two ends of the body portion respectively. During charge and discharge of the battery, a positive electrode active substance and a negative electrode active substance react with an electrolyte, and the tabs are connected to the electrode terminals to form a current loop.

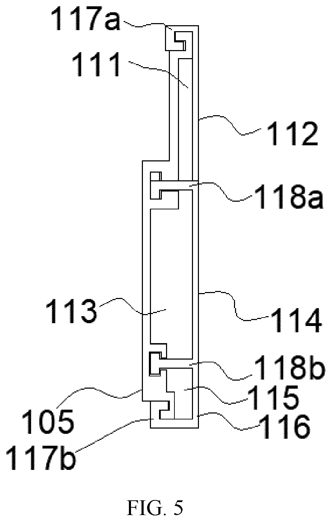

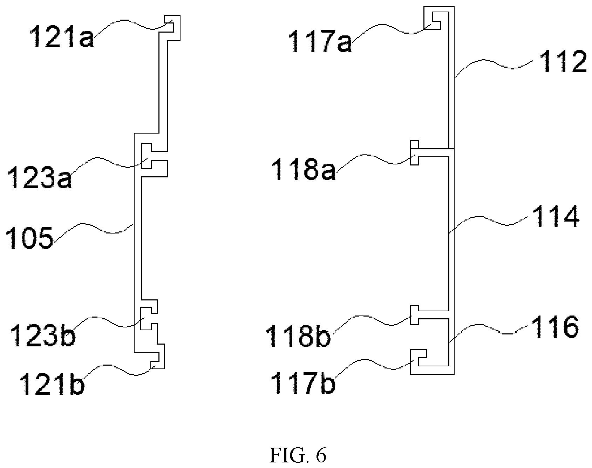

FIG. 3 schematically shows a structure of a battery according to an embodiment of this application. FIG. 4 is a three-dimensional exploded view of a trough-shaped member and a cover plate in a battery according to an embodiment of this application. FIG. 5 is a schematic cross-sectional diagram of a structure of a trough-shaped member and a cover plate in a battery in an assembled state according to an embodiment of this application. FIG. 6 is a schematic exploded view of the trough-shaped member and the cover plate shown in FIG. 5.

As shown in FIG. 3, the battery in this embodiment of this application includes a plurality of battery cells 100, a strap-shaped member 101 disposed fixedly relative to the plurality of battery cells 100, an electrical connection member 102 located adjacent to the strap-shaped member 101, and a trough-shaped member 104. As shown in FIG. 4 to FIG. 6, the trough-shaped member 104 integrally has at least a first accommodation trough 111 (or a first accommodation trough 311 mentioned below) and a second accommodation trough 113 (or a second accommodation trough 313 mentioned below), where the strap-shaped member 101 is accommodated in the first accommodation trough 111 (or the first accommodation trough 311 mentioned below), the electrical connection member 102 is accommodated in the second accommodation trough 113 (or the second accommodation trough 313 mentioned below), and a portion of the trough-shaped member is located between the strap-shaped member 101 and the battery cells 100.

It should be noted that a direction X in FIG. 3 is set as an arrangement direction of the plurality of battery cells 100; a direction Y is set as an extension direction of the strap-shaped member 101; and a direction Z is set as a height direction of the battery cell 100. In some cases, for ease of description with reference to the accompanying drawings, the direction Z may also be referred to as a vertical direction.

In some embodiments, the strap-shaped member 101 may be a strap-shaped member that wraps around the plurality of battery cells 100 (hereinafter also referred to as a "battery cell assembly") to bundle these battery cells 100 into a group. These battery cells 100 are bundled via the strap-shaped member 101, so that the battery cell assembly can be bundled and fastened. In some embodiments, the bundling of the battery cell assembly via the strap-shaped member 101 is implemented through the strap-shaped member 101 and a connector connecting ends of the strap-shaped member 101.

A bundling position of the strap-shaped member 101 on the battery cell assembly is not particularly limited as long as the battery cell assembly can be reliably bundled. However, for a battery in which the box 107 is located at a lower portion of the battery cell assembly shown in FIG. 3, at least one strap-shaped member 101 is disposed at approximately a center of the battery cell 100 in the height direction or at a higher position, which is conducive to firm and reliable bundling of the battery cell assembly. In addition, one strap-shaped member 101 may be arranged in the height direction of the battery cell 100, or two or more strap-shaped members may be arranged side by side. In FIG. 3, a case in which two strap-shaped members 101 are arranged side by side at intervals in the height direction of the battery cell 100 is used as an example for description.

In addition, the strap-shaped member 101 may be a metal strap, for example, a steel strap. The strap-shaped member 101 can have some elasticity and flexibility, which can allow the battery cell 100 to expand to some extent during use. In addition, the strap-shaped member 101 can further be partially detached from the battery cell assembly to form a gap under action of external pulling force when being bundled on the battery cell assembly, to allow a portion of the trough-shaped member 104 to pass (details are described below). In addition, a degree of bundling tightness of the strap-shaped member 101 relative to the battery cell assembly can be adjusted as required.

The electrical connection member 102 can be used for at least one of electrical connection between the battery cells 100, electrical connection between the battery cell 100 and an electric box connector 110, and electrical connection between the battery cell 100 and another electrical component. The electrical connection member 102 may be a relative high-voltage electrical connection member or low-voltage electrical connection member in the battery. In the example shown in FIG. 3, the electrical connection member 102 is, for example, the high-voltage electrical connection member (also referred to as a "high-voltage bar"). The high-voltage electrical connection member usually refers to a connection member that is primarily used for transmitting electrical energy of the battery.

There is no particular limitation on a shape of the electrical connection member 102. However, in this embodiment of this application, the flat strip-shaped electrical connection member 102 is used as an example for illustration. The electrical connection member 102 is made of a material with specified conductivity, and is usually made of a metal material such as aluminum or copper.

In the example shown in FIG. 3, the electrical connection member 102 is disposed near the strap-shaped member 101, for example, below the strap-shaped member 101, and the electrical connection member 102 is disposed substantially parallel to the strap-shaped member 101. Persons skilled in the art should know that such configuration is only one of the ways to achieve the objective of the present invention, and relative positions of the electrical connection member 102 and the strap-shaped member 101 are not limited to the manner shown in FIG. 3.

As shown in FIG. 4 to FIG. 8, the trough-shaped member 104 is, for example, an integrally formed member. Certainly, the trough-shaped member 104 can also be divided into two or three sections in its extension direction (direction Y in FIG. 3), but in consideration of installation convenience, reduction in the number of parts and the like, an integrally formed structure is preferred.

As shown in FIG. 4 to FIG. 8, the trough-shaped member 104 integrally has at least a first accommodation trough 111 (or a first accommodation trough 311 mentioned below) and a second accommodation trough 113 (or a second accommodation trough 313 mentioned below). The first accommodation trough is disposed abutting on the second accommodation trough in parallel in the height direction of the battery (direction Z in FIG. 3).

The strap-shaped member 101 is accommodated in the first accommodation trough 111 (or the first accommodation trough 311 mentioned below), the electrical connection member 102 is accommodated in the second accommodation trough 113 (or the second accommodation trough 313 mentioned below). A relationship between the strap-shaped member 101, the electrical connection member 102, and dimensions of inner walls of the first and second accommodation troughs only needs to satisfy that the strap-shaped member 101 and the electrical connection member 102 can be accommodated in their respective accommodation troughs and are little spaced or substantially not spaced from the inner walls of the troughs. If the space is too large, on the one hand, a volume of the trough-shaped member 104 is large, which affects the grouping efficiency of the battery. On the other hand, it is possible that reliable fastening cannot be implemented, and adverse effects such as fracture due to fatigue or noise occur due to vibration or the like.

When the trough-shaped member 104 has been installed on the strap-shaped member 101, a portion of the trough-shaped member 104 is located between the strap-shaped member 101 and the battery cell assembly. In other words, the trough-shaped member 104 is hung on the strap-shaped member 101 via the first accommodation trough 111 (or the first accommodation trough 311 mentioned below), and is also subjected to bundling force of the strap-shaped member 101, so that the trough-shaped member 104 can be reliably installed on the strap-shaped member 101 and is uneasy to fall off.

In this way, because the strap-shaped member 101 is disposed fixedly relative to the plurality of battery cells (battery cell assembly), a portion of the trough-shaped member 104 is located between the strap-shaped member 101 and the battery cells (battery cell assembly), and the strap-shaped member 101 is accommodated in the first accommodation trough 111 (or 311) of the trough-shaped member 104, the trough-shaped member 104 is fixedly installed on the strap-shaped member 101. In addition, because the electrical connection member 102 is accommodated in the second accommodation trough 113 (or 313) of the trough-shaped member 104, the electrical connection member 102 also has relatively fixed position, reliably fastening the electrical connection member 102. Because the electrical connection member 102 is reliably fastened, adverse effects such as fracture of the electrical connection member 102 in the battery due to fatigue are avoided, thereby improving reliability of the battery during use.

In addition, in this application, the electrical connection member 102 is reliably fastened through the trough-shaped member 104 fastened to the strap-shaped member 101, and therefore, a short electric box with a shorter side wall can be used for the battery, which can reduce space occupied by the battery box and the like, so that as many battery cells as possible can be arranged in limited battery installation space, thereby improving energy density of the battery.

In some embodiments of this application, a trough bottom plate 112 of the first accommodation trough 111 (or 311) is integrally connected with a trough bottom plate 114 (or 314) of the second accommodation trough 113 (or 313); the trough bottom plate 112 of the first accommodation trough 111 (or 311) is located between the strap-shaped member 101 and the battery cells 100; and the trough bottom plate 114 (or 314) of the second accommodation trough 113 (or 313) is located between the electrical connection member 102 and the battery cells 100.

As shown in FIG. 4 to FIG. 8, the accommodation trough can be composed of a trough bottom plate and trough side walls disposed upright relative to the trough bottom plate. Adjacent accommodation troughs can have integrally connected trough bottom plates, and share a trough side wall.

Specifically, in this embodiment shown in FIG. 5, the trough bottom plate 112 of the first accommodation trough 111 is integrally connected with a trough bottom plate 114 of the second accommodation trough 113, and therefore, the side wall (L-shaped trough side wall) 117a, a side wall (T-shaped trough side wall) 118a, and the trough bottom plate 112 of the first accommodation trough enclose accommodation space of the first accommodation trough 111. The side wall (T-shaped trough side wall) 118a, the side wall (T-shaped trough side wall) 118b, and the trough bottom plate 114 of the second accommodation trough 113 enclose accommodation space of the second accommodation trough 113.

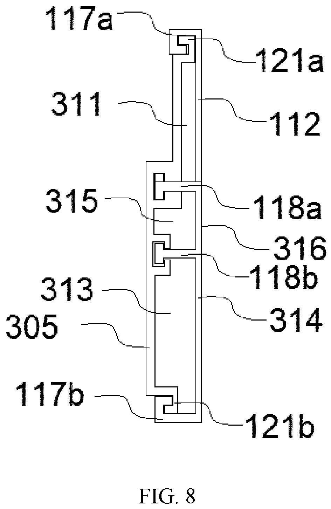

In this embodiment shown in FIG. 8, the trough bottom plate 112 of the first accommodation trough 311 is integrally connected with a trough bottom plate 314 of the second accommodation trough 313, and therefore, the side wall (L-shaped trough side wall) 117a, a side wall (T-shaped trough side wall) 118a, and the trough bottom plate 112 of the first accommodation trough enclose accommodation space of the first accommodation trough 311. The side wall (T-shaped trough side wall) 118b, the side wall (L-shaped trough side wall) 117b, and the trough bottom plate 314 of the second accommodation trough 313 enclose accommodation space of the second accommodation trough 313.

Because the trough bottom plates of the two accommodation troughs are integrally connected, the trough-shaped member 104 can be easily constructed into an integrally formed structure. Because the trough bottom plate 112 of the first accommodation trough 111 for accommodating the strap-shaped member 101 is located between the strap-shaped member and the battery cells, the trough-shaped member 104 is firmly fastened to the strap-shaped member 101 through a simple structure. Because the trough bottom plate 114 (314) of the second accommodation trough 113 (313) for accommodating the electrical connection member 102 is located between the electrical connection member 102 and the battery cells 100, the electrical connection member 102 can be reliably isolated from the battery cells 100, thereby reliably protecting the electrical connection member 102.

In some embodiments of this application, the battery further includes a wire harness 103; the trough-shaped member 104 further integrally has a third accommodation trough 115 (315), and the wire harness 103 is accommodated in the third accommodation trough 115 (or 315); and the trough bottom plate 112 of the first accommodation trough, the trough bottom plate 114 (314) of the second accommodation trough, and a trough bottom plate 116 (316) of the third accommodation trough are integrally connected in a coplanar manner.

Herein, the wire harness 103 may include a heating wire used for a thermal management system of the battery, a sampling wire used for the battery, and the like, and generally belongs to a low-voltage electrical connection member compared with the foregoing high-voltage electrical connection member. The wire harness 103 may include one or more wires. The third accommodation trough 115 (or 315) of the trough-shaped member 104 is configured to accommodate the wire harness 103. A positional relationship between the wire harness 103 and the third accommodation trough 115 (315) only needs to satisfy that the wire harness 103 can be accommodated in the accommodation trough, and is not particularly limited. But it is preferable to make the space between the wire harness 103 and the inner wall of the accommodation trough smaller in consideration of positioning of the wire harness 103 and miniaturization of the trough-shaped member 104.

In this embodiment shown in FIG. 5, the side wall (T-shaped trough side wall) 118b, the side wall (L-shaped trough side wall) 117b, and the trough bottom plate 116 of the third accommodation trough enclose accommodation space of the third accommodation trough 115.

In this embodiment shown in FIG. 8, the side wall (T-shaped trough side wall) 118a, the side wall (T-shaped trough side wall) 118b, and the trough bottom plate 316 of the third accommodation trough enclose accommodation space of the third accommodation trough 315.

The trough bottom plate 112 of the first accommodation trough, the trough bottom plate 114 (314) of the second accommodation trough, and a trough bottom plate 116 (316) of the third accommodation trough are integrally connected in a coplanar manner. Here, "coplanar" means that trough bottom plates of the three accommodation troughs are in the same plane. Certainly, persons skilled in the art should know that even if the trough bottom plates of the three accommodation troughs are not in the same plane, and there is a step drop therebetween instead, the trough-shaped member 104 can also fasten the electrical connection member and the wire harness.

As mentioned above, because the trough-shaped member 104 further integrally has the third accommodation trough 115 (or 315) for accommodating the wire harness, the wire harness 103 can also be fastened without increasing the number of parts, which can ensure that the electrical connection member 102 around the battery, the wire harness 103, and the like are trimly arranged at designated positions. Because the trough bottom plates of the first, second, and third accommodation troughs are integrally connected in the coplanar manner, the integrally formed trough-shaped member has a simple structure, and the entire bottom surface of the trough-shaped member 104 can be attached to the battery cell in a surface contact method during installation, which improves installation stability.

In some embodiments of this application, the first accommodation trough 111 (or 311), the second accommodation trough 113 (or 313), and the third accommodation trough 115 (or 315) each are strip-shaped, and the first accommodation trough 111 (or 311) is disposed parallel to at least one of the second accommodation trough 113 (or 313) and the third accommodation trough 115 (or 315); and the first accommodation trough 111 (or 311) is disposed abutting on the second accommodation trough 113 (or 313), or the first accommodation trough 111 (or 311) is disposed abutting on the third accommodation trough 115 (or 315).

Specifically, as shown in FIG. 3 and FIG. 4, the first accommodation trough 111 (or 311), the second accommodation trough 113 (or 313), and the third accommodation trough 115 (or 315) each form strip-shaped structures extending in the direction Y shown in FIG. 3, or any two or all three of the accommodation troughs may alternatively be disposed in parallel.

The first, second, and third accommodation troughs each are strip-shaped, and therefore are particularly suitable for accommodating the strap-shaped member 101, the electrical connection member 102, and the wire harness 103 in a strip shape. In addition, relative positions of the trough-shaped member 104, the strap-shaped member 101, the electrical connection member 102, and the wire harness 103 are fixed in a long range via the strip-shaped trough structures, and therefore, fastening force can be ensured in the long range, which can reliably avoid swinging or shaking of the electrical connection member 102, the wire harness 103, and the like. In addition, the foregoing designed trough-shaped member 104 is particularly suitable for a case in which extension directions of the strap-shaped member 101, the electrical connection member 102, and the wire harness 103 in the battery are substantially parallel. In addition, as shown in FIG. 5, the first accommodation trough 111 may be disposed abutting on the second accommodation trough 113, or as shown in FIG. 8, the third accommodation trough 311 may be disposed abutting on the third accommodation trough 315. Therefore, even if layout of the electrical connection member 102 and the wire harness 103 around the battery cells changes, the electrical connection member 102 and the wire harness 103 can be fastened via the trough-shaped members 104 with different structures.

In some embodiments of this application, the first accommodation trough 111 (or 311) is disposed on an edge side of the trough-shaped member 104 at one end.

Specifically, as shown in FIG. 5 to FIG. 8, the first accommodation trough 111 (or 311) is disposed on an edge side of the trough-shaped member 104 at one end. Referring to FIG. 3, because the strap-shaped member 101 is arranged at a relatively upper position in the battery, the first accommodation trough 111 is provided on the upper end edge of the trough-shaped member 104. In this way, to install the trough-shaped member 104 on the strap-shaped member 101, it is only necessary to insert one end edge of the trough-shaped member 104 (for example, the L-shaped trough side wall in FIG. 5), for example, from underneath into a gap between the strap-shaped member 101 and the battery cell assembly so that trough-shaped member 104 exceeds the strap-shaped member 101, which is conducive to installation and disassembly. In addition, to facilitate installation and disassembly, similar to the case shown in FIG. 5, a side wall (for example, the L-shaped trough side wall 117a in FIG. 3) on an edge side at one end that needs to exceed the strap-shaped member 101 can be made lower than the other side walls, which can reduce a distance between the strap-shaped member 101 and the battery cell assembly, and can reduce deformation of the strap-shaped member 101. Certainly, it is not essential to make the side wall on the edge side at one end lower, as long as the side wall can pass through the gap between the strap-shaped member 101 and the battery cell assembly.

As mentioned above, because the first accommodation trough 111 (or 311) for accommodating the strap-shaped member 101 is located on an edge side of the trough-shaped member 104 at one end, to install the trough-shaped member 104 relative to the strap-shaped member 101, it is only necessary to let one end of the trough-shaped member 104 exceed the strap-shaped member through the gap between the strap-shaped member 101 and the battery cell 100, to clamp the trough-shaped member 104 (the first accommodation trough of the trough-shaped member) into the strap-shaped member 101, thereby facilitating installation.

In some embodiments of this application, one or both end portions of the trough-shaped member 104 in an extension direction have an escape portion 119, and the escape portion 119 is formed by recessing the first accommodation trough 111 (or 311) relative to the second accommodation trough 113 (or 313) in the extension direction.

Specifically, in the example shown in FIG. 4, the first accommodation trough 111 is shorter than the second accommodation trough 113, and therefore, notches are formed at two end portions of the first accommodation trough 111 in the extension direction, and the notch forms the escape portion 119. When the end edge of the trough-shaped member 104 on the side of the first accommodation trough 111 is inserted into the gap between the strap-shaped member 101 and the battery cell assembly as mentioned above, interference and the like between two ends of the first accommodation trough 111 and the strap-shaped member 101 can be avoided during installation of the trough-shaped member 104 onto the strap-shaped member 101, thereby facilitating installation.

In addition, in the example shown in FIG. 4, the escape portions 119 are formed at both ends in the extension direction of the first accommodation trough 111, but the escape portion 119 may alternatively be formed at only one of the two ends.

In addition, because the escape portion 119 is formed only at the end portion of the first accommodation trough 111 (or 311), without making the entire trough-shaped member 104 shorter, fastening and maintaining effects of the trough-shaped member 104 on the electrical connection member 102 can be ensured to the maximum extent.

In some embodiments of this application, as shown in FIG. 3 to FIG. 8, the battery further includes a cover plate 105 (or 205 or 305) covering the trough-shaped member 104.

The cover plate can be a flat plate. However, in consideration of fitting of the cover plate with each side wall of the trough-shaped member 104, and demarcation of suitable accommodation space via the cover plate along with the trough-shaped member 104, for example, similar to a case shown in FIG. 3 to FIG. 8, the cover plate may be step-shaped. Specifically, a portion of the cover plate covering the first accommodation trough 111 (or 311) is closer to the trough bottom plate of the trough-shaped member 104 than a portion not covering the first accommodation trough 111 (or 311).

As shown in FIG. 5 to FIG. 8, the cover plate 105 (or 205 or 305) is installed on the trough-shaped member 104 by engaging an edge of the cover plate 105 with the side wall of the trough-shaped member 104.

The cover plate covers the trough-shaped member, so that the strap-shaped member 101, the electrical connection member 102, the wire harness 103, and the like can be reliably held in their respective accommodation troughs, thereby preventing the trough-shaped member 104 from falling off the strap-shaped member 101 and preventing the electrical connection member 102, the wire harness 103, or the like from falling off the trough-shaped member 104.

In some embodiments of this application, as shown in FIG. 5 to FIG. 8, the trough-shaped member 104 has L-shaped trough side walls 117a and 117b (or 217a and 217b) with an L-shaped cross section and T-shaped trough side walls 118a and 118b with a T-shaped cross section; and the cover plate 105 (or 205 or 305) has engaging portions 121a and 121b (or 221a and 221b) engaged with the L-shaped trough side walls 117a and 117b (or 217a and 217b) of the trough-shaped member 104, and fitting troughs 123a and 123b fitted with the T-shaped trough side walls 118a and 118b.

The L-shaped trough side walls 117a and 117b (or 217a and 217b) and the T-shaped trough side walls 118a and 118b of the trough-shaped member 104 are fitted with the corresponding engaging portions 121a and 121b (or 221a and 221b) and the fitting troughs 123a and 123b on the cover plate 105 (or 205 or 305), so that the cover plate 105 (or 205 or 305) can be installed on the trough-shaped member 104 and the cover plate is uneasy to fall off the trough-shaped member.

Herein, the L-shaped trough side wall and the engaging portion are described in detail. As shown in FIG. 5, FIG. 6, and FIG. 8, the trough-shaped member 104 has L-shaped trough side walls 117a and 117b with a substantially L-shaped cross section at upper and lower end edges. The L-shaped trough side walls 117a and 117b have one end connected to the upper and lower end edges of the trough bottom plate of the trough-shaped member, and have another end forming L-shaped engaging space at a position closer to an inner side than the end edge, so that substantially concave first engaging portions 121a and 121b of the cover plate 105 that are formed at the end edge are located in the engaging space, and are engaged with the L-shaped trough side walls 117a and 117b, thereby installing the cover plate 105 onto the trough-shaped member 104.

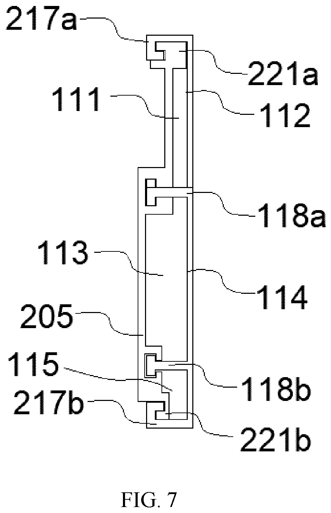

The L-shaped trough side walls and the engaging portion can also be appropriately deformed, and a deformation example is described below with reference to FIG. 7. The formed L-shaped trough side walls 217a and 217b of the trough-shaped member 104 in FIG. 7 are taller than the L-shaped trough side walls 117a and 117b in FIG. 5, FIG. 6, and FIG. 8. The first engaging portions 221a and 221b of the cover plate 205 that are formed at the end edge are also substantially concave, but are thicker than the first engaging portions 121a and 121b in FIG. 5, FIG. 6, and FIG. 8. The L-shaped trough side walls 217a and 217b are engaged with the first engaging portions 221a and 221b, so that the cover plate 205 is installed on the trough-shaped member 104. For the engaging structure of the L-shaped trough side walls 217a and 217b and the first engaging portions 221a and 221b in the deformation example, because the first engaging portions 221a and 221b are thicker, strength of the end edge of the cover plate 205 is higher.

In addition, the T-shaped trough side wall of the trough-shaped member and the fitting trough of the cover plate are described in detail. As shown in FIG. 5 to FIG. 7, the first accommodation trough 111 and the second accommodation trough 113 of the trough-shaped member 104 are separated by the T-shaped trough side wall 118a, and the second accommodation trough 113 and the third accommodation trough 115 are separated by the T-shaped trough side walls 118b. In the example shown in FIG. 8, the first accommodation trough 311 and third accommodation trough 315 of the trough-shaped member 104 are separated by the T-shaped trough side wall 118a, and the third accommodation trough 315 and the second accommodation trough 313 are separated by the T-shaped trough side walls 118b. The T-shaped trough side wall means that a cross section of the side wall is substantially T-shaped.

The first fitting trough 123a and the second fitting trough 123b are formed on the cover plates 105, 205, and 305, and each of the first fitting trough 123a and the second fitting trough 123b has trough space whose cross section is substantially T-shaped. When the cover plate is installed on the trough-shaped member, the T-shaped trough side walls 118a and 118b on the side with the trough-shaped member are respectively inserted into the first fitting trough 123a and the second fitting trough 123b, so that movement of the cover plate and the trough-shaped member in the vertical direction and the horizontal direction (detachment direction of the cover plate and the trough-shaped member) is restricted.

In some embodiments of this application, it could be seen from FIG. 3 and FIG. 4 that the L-shaped trough side wall and the T-shaped trough side wall extend along an extension direction of the trough-shaped member 104, and the L-shaped trough side wall is disposed on an end edge of the trough-shaped member.

Because the L-shaped trough side wall and the T-shaped trough side wall extend along the extension direction of the trough-shaped member 104, the cover plate 105 (or 205 or 305) can slide relative to the trough-shaped member 104 in its extension direction when the engaging portions 121a and 121b (or 221a and 221b) and the fitting troughs 123a and 123b of the cover plate are fitted with these side walls, so that the cover plate 105 (or 205 or 305) can be easily slid from an end of the trough-shaped member 104 in its extension direction to a designated position without falling off.

In some embodiments of this application, for example, as shown in FIG. 4, the cover plate 105 (or 205 or 305) has rivet holes 120 and is fastened to a bracket 108 on a side with the trough-shaped member 104 via rivets (not shown in the figure).

Specifically, for example, one rivet hole 120 is provided at each of two ends of the cover plate 105 (or 205 or 305) in the extension direction, and the cover plate is fastened to the bracket 108 on the side with the trough-shaped member 104 via the rivets or the like. Certainly, positions and the number of rivet holes are not limited to those in the foregoing examples, and can be set based on an actual need. In addition, for example, a plastic rivet can be used as the rivet.

Because the cover plate 105 (or 205 or 305) can also be fastened to the bracket on the side with the trough-shaped member 104 via the rivets, the cover plate 105 (or 205 or 305) can be reliably positioned relative to the trough-shaped member 104, thereby avoiding an undesirable case in which the cover plate 105 (or 205 or 305) freely slides on the trough-shaped member 104 due to vibration or the like. That is, the cover plate 105 (or 205 or 305) is positioned relative to the trough-shaped member 104 in all the X-axis direction, the Y-axis direction, and the Z-axis direction.

In some embodiments of this application, a material of at least one of the trough-shaped member 104 and the cover plate 105 (or 205 or 305) is an insulating material.

Specifically, the trough-shaped member 104 and the cover plate 105 (or 205 or 305) may be made of plastic, for example, may be formed by extrusion molding.

Because the material of the trough-shaped member and/or the cover plate is an insulating material, the electrical connection member, the wire harnesses, and the like can be insulated from a surrounding metal member and the like, so that the electrical connection member, the wire harnesses, and the like can be reliably isolated and protected.

In some embodiments of this application, the electrical connection member 102 is a high-voltage connection member.

Therefore, the high-voltage connection member mainly used to transmit electric energy of the battery can be reliably fastened and protected, which improves reliability of the key components of the battery during use and even the entire battery.

In some embodiments of this application, the plurality of battery cells are an odd number of battery cells, and the high-voltage connection member electrically connects the battery cells with an electric box; or the plurality of battery cells form an odd number of battery modules, and the high-voltage connection member electrically connects the battery modules with the electric box.

Specifically, in the examples shown in FIG. 2 and FIG. 3, three battery cells are used as an example for illustration. That is, FIG. 2 shows battery cells 100a, 100b, and 100c. Positive and negative electrodes of the battery cell 100a and the battery cell 100b are connected, and positive and negative electrodes of the battery cell 100b and the battery cell 100c are connected. The negative electrode of the battery cell 100a is connected to a negative electrode of the electric box connector 110 through a high-voltage connection member, and the positive electrode of the battery cell 100c is connected to the positive electrode of the electric box connector 110 through a high-voltage connection member. It can be seen from FIG. 2 that the high-voltage connection member between the negative electrode of the battery cell 100a and the negative electrode of the electric box connector 110 is a long high-voltage connection member. Referring to FIG. 3, the long high-voltage connection member can be the electric connector 102 in FIG. 3.

As mentioned above, because there is usually a high-voltage connection member with large extension length in a case that an odd number of battery cells are connected, the trough-shaped member in this application is particularly suitable for maintaining and fastening such high-voltage connection member, which can avoid fracture of the high-voltage connection member due to fatigue caused when the high-voltage connection member is more prone to great vibration if the high-voltage connection member is long.

A second aspect of this application provides an electric apparatus, including the battery in any one of implementations of the first aspect. FIG. 1 shows a vehicle as an example of an electric apparatus in this application.

Therefore, it is possible to provide an electric apparatus with high energy density in which the electrical connection member in the battery is reliably fastened to be less likely to undergo fracture due to fatigue, so that the battery has high reliability during use and occupies less space.

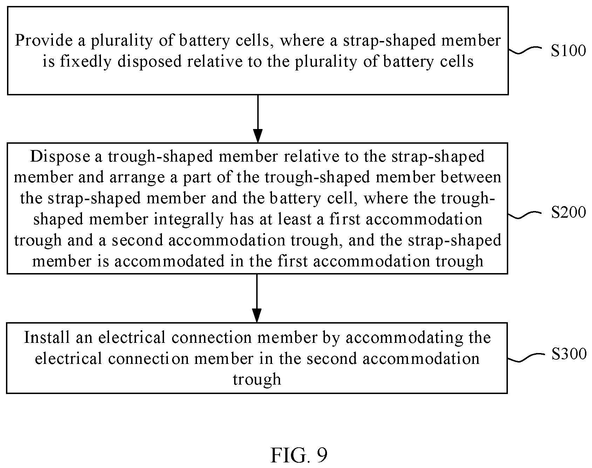

A third aspect of this application provides a battery assembling method. As shown in FIG. 9, the assembling method includes the following steps: providing a plurality of battery cells 100, where a strap-shaped member 101 is disposed fixedly relative to the plurality of battery cells 100 (step S100); disposing a trough-shaped member 104 relative to the strap-shaped member 101 and arranging a portion of the trough-shaped member 104 between the strap-shaped member 101 and the battery cells 100, where the trough-shaped member 104 integrally has at least a first accommodation trough 111 (or 311) and a second accommodation trough 113 (or 313), and the strap-shaped member 101 is accommodated in the first accommodation trough 111 (or 311) (step S200); and installing an electrical connection member 102 by accommodating the electrical connection member 102 in the second accommodation trough 113 (or 313) (step S300).

Because the strap-shaped member 101 is disposed fixedly relative to the plurality of battery cells 100, a portion of the trough-shaped member 104 is located between the strap-shaped member 101 and the battery cells 100, and the strap-shaped member 101 is accommodated in the first accommodation trough 111 (or 311) of the trough-shaped member, the trough-shaped member 104 is fixedly installed on the strap-shaped member 101. Because the electrical connection member 102 is accommodated in the second accommodation trough 113 (or 313) of the trough-shaped member, the electrical connection member 102 also has relatively fixed position, reliably fastening the electrical connection member 102. Because the electrical connection member 102 is reliably fastened, adverse effects such as fracture of the electrical connection member 102 in the battery due to fatigue are avoided, thereby improving reliability of the battery during use.

In addition, as mentioned above, in this application, the electrical connection member is reliably fastened through the trough-shaped member fastened to the strap-shaped member, and therefore, a short electric box with a shorter side wall can be used for the battery, which can reduce space occupied by the battery box and the like, so that as many battery cells as possible can be arranged in limited battery installation space, thereby improving energy density of the battery.

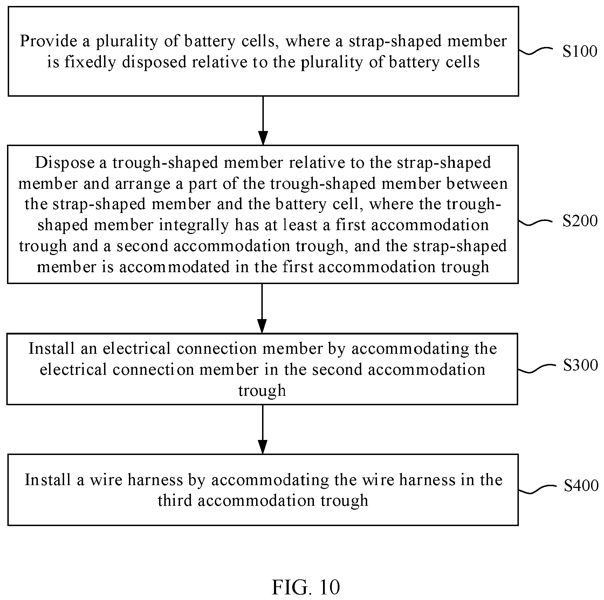

In some embodiments of this application, the trough-shaped member 104 further includes a third accommodation trough 115 (or 315), and as shown in FIG. 10, the assembling method further includes a step of installing a wire harness 103 by accommodating the wire harness 103 in the third accommodation trough 115 (or 315) (step S400).

Because the wire harness 103 is accommodated in the third accommodation trough 115 (or 315) of the trough-shaped member, the wire harness can also be fastened and maintained without increasing the number of parts. Therefore, it can be ensured that the electrical connection member 102 around the battery, the wire harness 103, and the like are trimly arranged at designated positions.

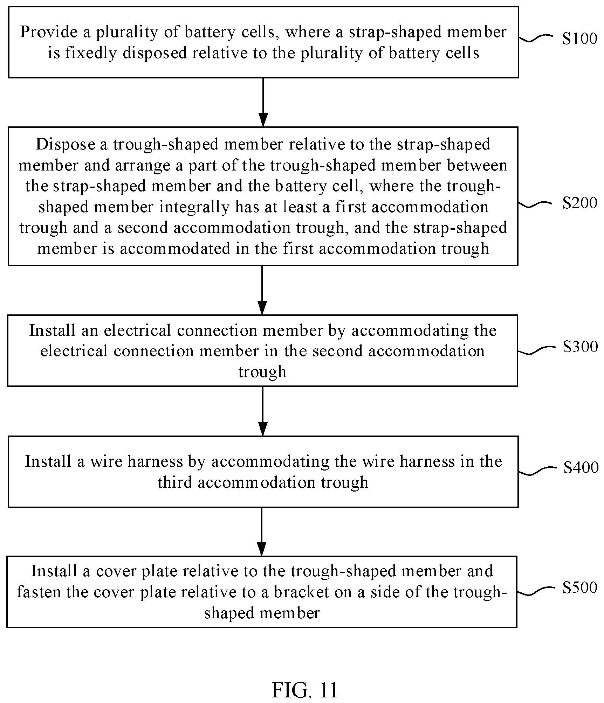

In some embodiments of this application, as shown in FIG. 11, the assembling method further includes the following step: installing a cover plate 105 (or 205 or 305) relative to the trough-shaped member 104 and fastening the cover plate 105 (or 205 or 305) relative to the trough-shaped member 104 (step S500).

The cover plate 105 (or 205 or 305) covers the trough-shaped member 104, so that the strap-shaped member 101, the electrical connection member 102, the wire harness 103, and the like can be reliably held in their respective accommodation troughs, thereby preventing the trough-shaped member 104 from falling off the strap-shaped member 101 and preventing the electrical connection member 102, the wire harness 103, or the like from falling off the trough-shaped member 104. In addition, because the cover plate 105 (or 205 or 305) is fastened relative to the trough-shaped member 104, an undesirable case in which the cover plate freely slides on the trough-shaped member due to vibration or the like can be avoided.

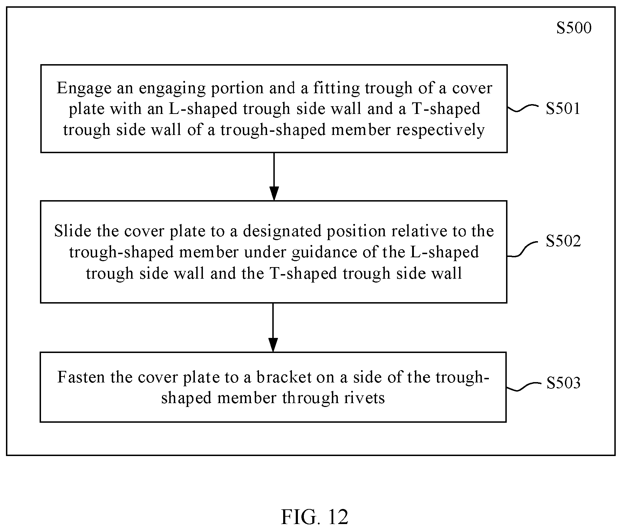

In some embodiments of this application, as shown in FIG. 12, the installing a cover plate relative to the trough-shaped member and fastening the cover plate relative to the trough-shaped member (step S500) includes: engaging the engaging portions 121a and 121b (or 221a and 221b) and fitting troughs 123a and 123b of the cover plate 105 (or 205 or 305) with L-shaped trough side walls 117a and 117b (or 217a and 217b) and T-shaped trough side walls 118a and 118b of the trough-shaped member 104 (step S501) respectively; sliding the cover plate 105 (or 205 or 305) to a designated position relative to the trough-shaped member 104 under guidance of the L-shaped trough side walls 117a and 117b (or 217a and 217b) and the T-shaped trough side walls 118a and 118b (step S502); and fastening the cover plate 105 (or 205 or 305) to the bracket 108 on the side with the trough-shaped member 104 via rivets (step S503).

Therefore, the L-shaped trough side walls 117a and 117b (or 217a and 217b) and the T-shaped trough side walls 118a and 118b of the trough-shaped member 104 are fitted with the corresponding engaging portions 121a and 121b (or 221a and 221b) and the fitting troughs 123a and 123b on the cover plate 105 (or 205 or 305), so that the cover plate 105 (or 205 or 305) can be installed on the trough-shaped member 104 and the cover plate 105 (or 205 or 305) is uneasy to fall off the trough-shaped member 104. Because the cover plate 105 (or 205 or 305) can slide relatively on the trough-shaped member 104 under guidance of the L-shaped trough side walls 117a and 117b (or 217a and 217b) and the T-shaped trough side walls 118a and 118b, the cover plate can be easily installed at a designated position from an end of the trough-shaped member 104 in the extension direction.

Through the foregoing solutions, in this application, a battery, an electric apparatus including the battery, and a battery assembling method having at least one of the following effects can be implemented.

The electrical connection member in the battery can be reliably fastened and maintained, so that fracture of the electrical connection member in the battery due to fatigue can be avoided, and reliability of the battery during use can be further improved. Certainly, reliability of the electric apparatus including the battery during use is correspondingly improved, and maintenance costs are reduced.

In addition, space occupied by the battery box and the like can be reduced, thereby improving energy density of the battery. Correspondingly, use efficiency, design freedom and the like of space around the battery in the electric apparatus including the battery are improved, and the number of times of replacing or charging the battery in the electric apparatus is reduced, and use costs are reduced.

The following describes specific embodiments of this application by using an example.

As shown in FIG. 3 to FIG. 6, to fasten the electrical connection member 102 and the wire harness 103 used as the high-voltage connection members of the battery, this embodiment provides an extrusion-molded trough-shaped member 104 and an extrusion-molded cover plate 105. The trough-shaped member 104 includes a first accommodation trough 111 for accommodating a steel strap, a second accommodation trough 113 for accommodating the electrical connection member 102, and a third accommodation trough 115 for accommodating the wire harnesses that are arranged vertically side by side. The trough-shaped member 104 is fastened to the strap-shaped member 101 made of the steel strap, thereby respectively fastening the electrical connection member (for example, the high-voltage connection member) 102 and the wire harness 103 to the strap-shaped member 101 that bundles the plurality of battery cells 100.

The first accommodation trough 111, the second accommodation trough 113, and the third accommodation trough 115 are structures arranged vertically side by side, and are respectively configured to accommodate the strap-shaped member 101 made of the steel strap, the electrical connection member 102, and the wire harness 103. Length of the second accommodation trough 113 and the third accommodation trough 115 is equivalent to length of the electrical connection member 102 on an inner side (side of the electrical connection member 102 that faces the battery cell 100), to fasten the trough-shaped member 104 along the length direction of the electrical connection member 102 and avoid movement and detachment of the trough-shaped member 104. The first accommodation trough 111 is shorter than the second accommodation trough 113, so that the trough-shaped member 104 can pass through the inner side of the strap-shaped member 101 (side of the strap-shaped member 101 that faces the battery cell 100), and clamp the strap-shaped member 101. L-shaped anti-detachment structures are designed at upper and lower end edges of the cover plate 105, that is, the first engaging portion 121a and the second engaging portion 121b. T-shaped anti-detachment structures are designed in the middle, that is, the first fitting trough 123a and the second fitting trough 123b. The cover plate 105 is correspondingly fitted with the upright side walls of the trough-shaped member 104 through the first engaging portion 121a, the second engaging portion 121b, the first fitting trough 123a, and the second fitting trough 123b, to form a strap-shaped member accommodation cavity, an electrical connection member accommodation cavity, and a wire harness accommodation cavity that are isolated from each other shown in FIG. 5.

In addition, as shown in FIG. 4, the cover plate 105 is further provided with rivet holes 120, and the rivet holes 120 fit holes (not shown) in the bracket 108 of the battery to prevent the cover plate 105 from moving and falling off along the length direction.

In another embodiment shown in FIG. 7, the formed L-shaped trough side walls 217a and 217b are taller than the L-shaped trough side walls 117a and 117b in FIG. 5, FIG. 6, and FIG. 8. The first engaging portions 221a and 221b of the cover plate 205 that are formed at the end edge are also substantially concave, but are thicker than the first engaging portions 121a and 121b in FIG. 5, FIG. 6, and FIG. 8. The L-shaped trough side walls 217a and 217b are engaged with the first engaging portions 221a and 221b, so that the cover plate 205 is installed on the trough-shaped member 104.

In still another embodiment shown in FIG. 8, positions of the second accommodation trough 112 and the third accommodation trough 113 are changed, so that the third accommodation trough 113 is located between the first accommodation trough 111 and the second accommodation trough 112.

The foregoing embodiments are exemplary, and persons skilled in the art is aware that the foregoing elements can be combined, replaced, or omitted.

The embodiments of this application are described above, but persons skilled in the art should understand that this application is not limited to the foregoing embodiments. The foregoing embodiments are merely examples, and embodiments having substantially the same constructions and the same effects as the technical idea within the scope of the technical solutions of this application are all included in the technical scope of this application.

## Claims

1. A battery (10) comprising:
a plurality of battery cells (100);
a strap-shaped member (101) disposed fixedly relative to the plurality of battery cells (100);
an electrical connection member (102) located adjacent to the strap-shaped member (101); and
a trough-shaped member (104), integrally having at least a first accommodation trough (111, 311) and a second accommodation trough (113, 313), the strap-shaped member (101) is accommodated in the first accommodation trough (111, 311), the electrical connection member (102) is accommodated in the second accommodation trough (113, 313), and a portion of the trough-shaped member (104) is located between the strap-shaped member (101) and the battery cells (100).

2. The battery (10) according to claim 1, **characterized in that**
a trough bottom plate of the first accommodation trough (112) is integrally connected with a trough bottom plate of the second accommodation trough (114);
the trough bottom plate of the first accommodation trough (112) is located between the strap-shaped member (101) and the battery cells (100); and
the trough bottom plate of the second accommodation trough (114) is located between the electrical connection member (102) and the battery cells (100).

3. The battery (10) according to claim 1 or 2, **characterized in that**
the battery (10) further comprises a wire harness (103);
the trough-shaped member (104) further integrally has a third accommodation trough (115, 315), and the wire harness (103) is accommodated in the third accommodation trough (115, 315); and
the trough bottom plate of the first accommodation trough (112), the trough bottom plate of the second accommodation trough (114), and a trough bottom plate of the third accommodation trough (116, 316) are integrally connected in a coplanar manner.

4. The battery (10) according to claim 3, **characterized in that**
the first accommodation trough (111, 311), the second accommodation trough (113, 313), and the third accommodation trough (115, 315) each are strip-shaped, and the first accommodation trough (111, 311) is disposed parallel to at least one of the second accommodation trough (113, 313) and the third accommodation trough (115, 315); and
the first accommodation trough (111, 311) is disposed abutting on the second accommodation trough (113, 313), or the first accommodation trough (111, 311) is disposed abutting on the third accommodation trough (115, 315).

5. The battery (10) according to any one of claims 1 to 4, **characterized in that**
the first accommodation trough (111, 311) is disposed on an edge side of the trough-shaped member (104) at one end.

6. The battery (10) according to any one of claims 1 to 5, **characterized in that**
one or both end portions of the trough-shaped member (104) in an extension direction have an escape portion (119), and the escape portion (119) is formed by recessing the first accommodation trough (111, 311) relative to the second accommodation trough (113, 313) in the extension direction.

7. The battery (10) according to any one of claims 1 to 6, **characterized in that**
the battery (10) further comprises a cover plate (105, 205, 305) covering the trough-shaped member (104).

8. The battery (10) according to claim 7, **characterized in that**
the trough-shaped member (104) has an L-shaped trough side wall (117a, 117b, 217a, 217b) with an L-shaped cross section and a T-shaped trough side wall (118a, 118b) with a T-shaped cross section; and
the cover plate (105, 205, 305) has an engaging portion engaged with the L-shaped trough side wall (117a, 117b, 217a, 217b) of the trough-shaped member (104), and a fitting trough fitted with the T-shaped trough side wall (118a, 118b).

9. The battery (10) according to claim 8, **characterized in that**
the L-shaped trough side wall (117a, 117b, 217a, 217b) and the T-shaped trough side wall (118a, 118b) extend along an extension direction of the trough-shaped member (104), and the L-shaped trough side wall (117a, 117b, 217a, 217b) is disposed on an end edge of the trough-shaped member (104).

10. The battery (10) according to any one of claims 7 to 9, **characterized in that**
the cover plate (105, 205, 305) has rivet holes (120) and is fastened to a bracket (108) on a side with the trough-shaped member (104) via rivets;
and/or
**characterized in that**
a material of at least one of the trough-shaped member (104) and the cover plate (105, 205, 305) is an insulating material.

11. The battery (10) according to claim 1, **characterized in that**
the electrical connection member (102) is a high-voltage connection member.

12. The battery (10) according to claim 11, **characterized in that**
the plurality of battery cells (100) are an odd number of battery cells (100), and the high-voltage connection member electrically connects the battery cells (100) with an electric box; or the plurality of battery cells (100) form an odd number of battery modules, and the high-voltage connection member electrically connects the battery modules with the electric box.

13. An electric apparatus, **characterized by** comprising the battery (10) according to any one of claims 1 to 12.

14. A battery assembling method for assembly of a battery according to claim 1, comprising the following steps:
providing (S100) a plurality of battery cells, wherein a strap-shaped member is disposed fixedly relative to the plurality of battery cells;
disposing (S200) a trough-shaped member relative to the strap-shaped member and arranging a portion of the trough-shaped member between the strap-shaped member and the battery cell, wherein the trough-shaped member integrally has at least a first accommodation trough and a second accommodation trough, and the strap-shaped member is accommodated in the first accommodation trough; and
installing (S300) an electrical connection member by accommodating the electrical connection member in the second accommodation trough.

15. The battery assembling method according to claim 14, **characterized in that** the trough-shaped member further comprises a third accommodation trough, and the assembling method further comprises the following step:
installing (S400) a wire harness by accommodating the wire harness in the third accommodation trough;
and/or
**characterized by** further comprising the following step:
installing (S500) a cover plate relative to the trough-shaped member and fastening the cover plate relative to a bracket on a side with the trough-shaped member, preferably,
**characterized in that**
the installing (S500) a cover plate relative to the trough-shaped member and fastening the cover plate relative to a bracket on a side with the trough-shaped member comprises:
engaging (S501) an engaging portion and a fitting trough of the cover plate with an L-shaped trough side wall and a T-shaped trough side wall of the trough-shaped member respectively;
sliding (S502) the cover plate to a designated position relative to the trough-shaped member under guidance of the L-shaped trough side wall and the T-shaped trough side wall; and
fastening (S503) the cover plate to the bracket on the side with the trough-shaped member via rivets.

## Patentansprüche

1. Batterie (10), umfassend:
eine Vielzahl von Batteriezellen (100);
ein bandförmiges Element (101), das relativ zu der Vielzahl von Batteriezellen (100) fest angeordnet ist;
ein elektrisches Verbindungselement (102), das benachbart zu dem bandförmigen Element (101) angeordnet ist; und
ein schalenförmiges Element (104), das integral zumindest eine erste Aufnahmeschale (111, 311) und eine zweite Aufnahmeschale (113, 313) aufweist, wobei das bandförmige Element (101) in der ersten Aufnahmeschale (111, 311) aufgenommen ist, das elektrische Verbindungselement (102) in der zweiten Aufnahmeschale (113, 313) aufgenommen ist und sich ein Abschnitt des schalenförmigen Elements (104) zwischen dem bandförmigen Element (101) und den Batteriezellen (100) befindet.

2. Batterie (10) nach Anspruch 1, **dadurch gekennzeichnet, dass**
eine Schalenbodenplatte der ersten Aufnahmeschale (112) integral mit einer Schalenbodenplatte der zweiten Aufnahmeschale (114) verbunden ist;
sich die Schalenbodenplatte der ersten Aufnahmeschale (112) zwischen dem bandförmigen Element (101) und den Batteriezellen (100) befindet; und
sich die Schalenbodenplatte der zweiten Aufnahmeschale (114) zwischen dem elektrischen Verbindungselement (102) und den Batteriezellen (100) befindet.

3. Batterie (10) nach Anspruch 1 oder 2, **dadurch gekennzeichnet, dass**
die Batterie (10) ferner einen Kabelbaum (103) umfasst;
das schalenförmige Element (104) ferner integral eine dritte Aufnahmeschale (115, 315) aufweist und der Kabelbaum (103) in der dritten Aufnahmeschale (115, 315) aufgenommen ist; und
die Schalenbodenplatte der ersten Aufnahmeschale (112), die Schalenbodenplatte der zweiten Aufnahmeschale (114) und eine Schalenbodenplatte der dritten Aufnahmeschale (116, 316) koplanar integral miteinander verbunden sind.

4. Batterie (10) nach Anspruch 3, **dadurch gekennzeichnet, dass**
die erste Aufnahmeschale (111, 311), die zweite Aufnahmeschale (113, 313) und die dritte Aufnahmeschale (115, 315) jeweils streifenförmig sind und die erste Aufnahmeschale (111, 311) parallel zu mindestens einer der zweiten Aufnahmeschale (113, 313) und der dritten Aufnahmeschale (115, 315) angeordnet ist; und
die erste Aufnahmeschale (111, 311) an der zweiten Aufnahmeschale (113, 313) anliegend angeordnet ist oder die erste Aufnahmeschale (111, 311) an der dritten Aufnahmeschale (115, 315) anliegend angeordnet ist.

5. Batterie (10) nach einem der Ansprüche 1 bis 4, **dadurch gekennzeichnet, dass**
die erste Aufnahmeschale (111, 311) auf einer Kantenseite des schalenförmigen Elements (104) an einem Ende angeordnet ist.

6. Batterie (10) nach einem der Ansprüche 1 bis 5, **dadurch gekennzeichnet, dass**
ein oder beide Endabschnitte des schalenförmigen Elements (104) in einer Verlängerungsrichtung einen Auslaufabschnitt (119) aufweisen, und der Auslaufabschnitt (119) dadurch gebildet ist, dass die erste Aufnahmeschale (111, 311) relativ zur zweiten Aufnahmeschale (113, 313) in der Verlängerungsrichtung vertieft ist.

7. Batterie (10) nach einem der Ansprüche 1 bis 6, **dadurch gekennzeichnet, dass**
die Batterie (10) ferner eine Abdeckplatte (105, 205, 305) umfasst, die das schalenförmige Element (104) abdeckt.

8. Batterie (10) nach Anspruch 7, **dadurch gekennzeichnet, dass**
das schalenförmige Element (104) eine L-förmige Schalenseitenwand (117a, 117b, 217a, 217b) mit einem L-förmigen Querschnitt und eine T-förmige Schalenseitenwand (118a, 118b) mit einem T-förmigen Querschnitt aufweist; und
die Abdeckplatte (105, 205, 305) einen Eingriffsabschnitt, der mit der L-förmigen Schalenseitenwand (117a, 117b, 217a, 217b) des schalenförmigen Elements (104) in Eingriff steht, und eine Passschale aufweist, die mit der T-förmigen Schalenseitenwand (118a, 118b) zusammengepasst ist.

9. Batterie (10) nach Anspruch 8, **dadurch gekennzeichnet, dass**
sich die L-förmige Schalenseitenwand (117a, 117b, 217a, 217b) und die T-förmige Schalenseitenwand (118a, 118b) entlang einer Verlängerungsrichtung des schalenförmigen Elements (104) erstrecken und die L-förmige Schalenseitenwand (117a, 117b, 217a, 217b) an einer Endkante des schalenförmigen Elements (104) angeordnet ist.

10. Batterie (10) nach einem der Ansprüche 7 bis 9, **dadurch gekennzeichnet, dass**
die Abdeckplatte (105, 205, 305) Nietlöcher (120) aufweist und auf einer Seite mit dem schalenförmigen Element (104) über Nieten an einer Halterung (108) befestigt ist;
und/oder
**dadurch gekennzeichnet, dass**
es sich bei einem Material zumindest eines des schalenförmigen Elements (104) und der Abdeckplatte (105, 205, 305) um ein Isoliermaterial handelt.

11. Batterie (10) nach Anspruch 1, **dadurch gekennzeichnet, dass**
es sich bei dem elektrischen Verbindungselement (102) um ein Hochspannungs-Verbindungselement handelt.

12. Batterie (10) nach Anspruch 11, **dadurch gekennzeichnet, dass**
die Vielzahl von Batteriezellen (100) eine ungerade Anzahl von Batteriezellen (100) ist und das Hochspannungs-Verbindungselement die Batteriezellen (100) elektrisch mit einem Schaltkasten verbindet; oder die Vielzahl von Batteriezellen (100) eine ungerade Anzahl von Batteriemodulen bildet und das Hochspannungs-Verbindungselement die Batteriemodule elektrisch mit dem Schaltkasten verbindet.

13. Elektrische Einrichtung, **dadurch gekennzeichnet, dass** sie die Batterie (10) nach einem der Ansprüche 1 bis 12 umfasst.

14. Verfahren zum Zusammenbauen einer Batterie nach Anspruch 1, umfassend die folgenden Schritte:
Bereitstellen (S100) einer Vielzahl von Batteriezellen, wobei ein bandförmiges Element relativ zu der Vielzahl von Batteriezellen fest angeordnet ist;
Anordnen (S200) eines schalenförmigen Elements relativ zu dem bandförmigen Element und Anordnen eines Abschnitts des schalenförmigen Elements zwischen dem bandförmigen Element und der Batteriezelle, wobei das schalenförmige Element integral zumindest eine erste Aufnahmeschale und eine zweite Aufnahmeschale aufweist und das bandförmige Element in der ersten Aufnahmeschale aufgenommen ist; und
Installieren (S300) eines elektrischen Verbindungselements durch Aufnehmen des elektrischen Verbindungselements in der zweiten Aufnahmeschale.

15. Verfahren zum Zusammenbauen einer Batterie nach Anspruch 14, **dadurch gekennzeichnet, dass** das schalenförmige Element ferner eine dritte Aufnahmeschale umfasst und das Verfahren zum Zusammenbauen ferner den folgenden Schritt umfasst:
Installieren (S400) eines Kabelbaums durch Aufnehmen des Kabelbaums in der dritten Aufnahmeschale;
und/oder
**dadurch gekennzeichnet, dass** es ferner den folgenden Schritt umfasst:
Installieren (S500) einer Abdeckplatte relativ zu dem schalenförmigen Element und Befestigen der Abdeckplatte relativ zu einer Halterung auf einer Seite mit dem schalenförmigen Element, bevorzugt
**dadurch gekennzeichnet, dass**
das Installieren (S500) einer Abdeckplatte relativ zu dem schalenförmigen Element und das Befestigen der Abdeckplatte relativ zu einer Halterung auf einer Seite mit dem schalenförmigen Element umfasst:
Ineingriffbringen (S501) eines Eingriffsabschnitts und einer Passschale der Abdeckplatte mit einer L-förmigen Schalenseitenwand bzw. einer T-förmigen Schalenseitenwand des schalenförmigen Elements;
Schieben (S502) der Abdeckplatte in eine bestimmte Position relativ zu dem schalenförmigen Element unter Führung der L-förmigen Schalenseitenwand und der T-förmigen Schalenseitenwand; und
Befestigen (S503) der Abdeckplatte an der Halterung auf der Seite mit dem schalenförmigen Element über Nieten.

## Revendications

1. Batterie (10) comprenant :
une pluralité d'éléments de batterie (100),
un élément en forme de barrette (101) disposé de manière fixe par rapport à la pluralité d'éléments de batterie (100) ;
un élément de connexion électrique (102) situé adjacent à l'élément en forme de barrette (101) ; et un élément en forme de goulotte (104), comprenant d'un seul tenant au moins une première goulotte de réception (111, 311) et une deuxième goulotte de réception (113, 313), l'élément en forme de barrette (101) étant reçu dans la première goulotte de réception (111, 311), l'élément de connexion électrique (102) étant reçu dans la deuxième goulotte de réception (113, 313), et une partie de l'élément en forme de goulotte (104) étant située entre l'élément en forme de barrette (101) et les éléments de batterie (100).

2. Batterie (10) selon la revendication 1, **caractérisée en ce que**
une plaque inférieure de goulotte de la première goulotte de réception (112) est reliée d'un seul tenant à une plaque inférieure de goulotte de la deuxième goulotte de réception (114) ;
la plaque inférieure de goulotte de la première goulotte de réception (112) est située entre l'élément en forme de barrette (101) et les éléments de batterie (100) ; et
la plaque inférieure de goulotte de la deuxième goulotte de réception (114) est située entre l'élément de connexion électrique (102) et les éléments de batterie (100).

3. Batterie (10) selon la revendication 1 ou 2, **caractérisée en ce que**
la batterie (10) comprend en outre un faisceau de câbles (103) ;
l'élément en forme de goulotte (104) comporte en outre d'un seul tenant une troisième goulotte de réception (115, 315), et le faisceau de câbles (103) est reçu dans la troisième goulotte de réception (115, 315) ; et
la plaque inférieure de la première goulotte de réception (112), la plaque inférieure de la deuxième goulotte de réception (114) et une plaque inférieure de goulotte de la troisième goulotte de réception (116, 316) sont reliées d'un seul tenant de manière coplanaire.

4. Batterie (10) selon la revendication 3, **caractérisée en ce que**
la première goulotte de réception (111, 311), la deuxième goulotte de réception (113, 313) et la troisième goulotte de réception (115, 315) sont chacune en forme de bande, et la première goulotte de réception (111, 311) est disposée parallèlement à la deuxième goulotte de réception (113, 313) et à la troisième goulotte de réception (115, 315)
la première goulotte de réception (111, 311) est disposée en butée contre la deuxième goulotte de réception (113, 313), ou la première goulotte de réception (111, 311) est disposée en butée contre la troisième goulotte de réception (115, 315).

5. Batterie (10) selon l'une quelconque des revendications 1 à 4, **caractérisée en ce que**
la première goulotte de réception (111, 311) est disposée sur un côté de bord de l'élément en forme de goulotte (104) à une extrémité.

6. Batterie (10) selon l'une quelconque des revendications 1 à 5, **caractérisée en ce que**
une ou les deux parties d'extrémité de l'élément en forme de goulotte (104) dans une direction d'extension présentent une partie d'échappement (119), et la partie d'échappement (119) est formée par enfoncement de la première goulotte de réception (111, 311) par rapport à la deuxième goulotte de réception (113, 313) dans la direction d'extension.

7. Batterie (10) selon l'une quelconque des revendications 1 à 6, **caractérisée en ce que**
la batterie (10) comprend en outre une plaque de recouvrement (105, 205, 305) recouvrant l'élément en forme de goulotte (104).

8. Batterie (10) selon la revendication 7, **caractérisée en ce que**
l'élément en forme de goulotte (104) comprend une paroi latérale de goulotte en L (117a, 117b, 217a, 217b) avec une section transversale en L et une paroi latérale de goulotte en T (118a, 118b) avec une section transversale en T ; et
la plaque de recouvrement (105, 205, 305) présente une partie de mise en prise avec la paroi latérale de goulotte en L (117a, 117b, 217a, 217b) de l'élément en forme de goulotte (104), et une goulotte d'ajustement ajustée avec la paroi latérale de goulotte en T (118a, 118b).

9. Batterie (10) selon la revendication 8, **caractérisée en ce que**
la paroi latérale de goulotte en L (117a, 117b, 217a, 217b) et la paroi latérale de goulotte en T (118a, 118b) s'étendent dans une direction d'extension de l'élément en forme de goulotte (104), et la paroi latérale de goulotte en L (117a, 117b, 217a, 217b) est disposée sur un bord d'extrémité de l'élément en forme de goulotte (104).

10. Batterie (10) selon l'une quelconque des revendications 7 à 9, **caractérisée en ce que**
la plaque de recouvrement (105, 205, 305) comporte des trous de rivets (120) et est fixée à un support (108) sur un côté avec l'élément en forme de goulotte (104) par le biais de rivets ;
et/ou
**caractérisée en ce que**
un matériau d'au moins l'un des éléments en forme de goulotte (104) et de la plaque de recouvrement (105, 205, 305) est un matériau isolant.

11. Batterie (10) selon la revendication 1, **caractérisée en ce que**
l'élément de connexion électrique (102) est un élément de connexion haute tension.

12. Batterie (10) selon la revendication 11, **caractérisée en ce que**
la pluralité d'éléments de batterie (100) forme un nombre impair d'éléments de batterie (100), et l'élément de connexion haute tension connecte électriquement les éléments de batterie (100) à un boîtier électrique ; ou la pluralité d'éléments de batterie (100) forme un nombre impair de modules de batterie, et l'élément de connexion haute tension connecte électriquement les modules de batterie au boîtier électrique.

13. Appareil électrique, **caractérisé en ce qu'**il comprend la batterie (10) selon l'une quelconque des revendications 1 à 12.

14. Procédé d'assemblage de batterie pour l'assemblage d'une batterie selon la revendication 1, comprenant les étapes suivantes :
la fourniture (S100) d'une pluralité d'éléments de batterie, dans lequel un élément en forme de barrette est disposé de manière fixe par rapport à la pluralité d'éléments de batterie ;
la disposition (S200) d'un élément en forme de goulotte par rapport à l'élément en forme de barrette et la disposition d'une partie de l'élément en forme de goulotte entre l'élément en forme de barrette et l'élément de batterie, l'élément en forme de goulotte présentant d'un seul tenant au moins une première goulotte de réception et une deuxième goulotte de réception, et l'élément en forme de barrette étant reçu dans la première goulotte de réception ; et
l'installation (S300) d'un élément de connexion électrique par la réception de l'élément de connexion électrique dans la deuxième goulotte de réception.

15. Procédé d'assemblage de batterie selon la revendication 14, **caractérisé en ce que** l'élément en forme de goulotte comprend en outre une troisième goulotte de réception, et le procédé d'assemblage comprend en outre l'étape suivante :
l'installation (S400) d'un faisceau de câbles par réception dans la troisième goulotte de réception ;
et/ou
**caractérisé en ce qu'**il comprend en outre l'étape suivante :
l'installation (S500) d'une plaque de recouvrement par rapport à l'élément en forme de goulotte et la fixation de la plaque de recouvrement par rapport à un support sur un côté avec l'élément en forme de goulotte, de préférence,
**caractérisé en ce que**
l'installation (S500) d'une plaque de recouvrement par rapport à l'élément en forme de goulotte et la fixation de la plaque de recouvrement par rapport à un support sur un côté avec l'élément en forme de goulotte comprennent :
la mise en prise (S501) d'une partie de prise et d'une goulotte d'ajustement de la plaque de recouvrement avec respectivement une paroi latérale de goulotte en L et une paroi latérale de goulotte en T de l'élément en forme de goulotte ;
le glissement (S502) de la plaque de recouvrement dans une position désignée par rapport à l'élément en forme de goulotte au moyen du guidage de la paroi latérale de goulotte en L et de la paroi latérale de goulotte en T ; et
la fixation (S503) de la plaque de recouvrement au support sur le côté avec l'élément en forme de goulotte par le biais de rivets.
